(19) Europäisches Patentamt
European Patent Office
Office européen des brevets

(11) EP 2 936 047 B1

(12) # FASCICULE DE BREVET EUROPEEN

(45) Date de publication et mention de la délivrance du brevet:
**12.02.2020 Bulletin 2020/07**

(21) Numéro de dépôt: **13808055.1**

(22) Date de dépôt: **18.12.2013**

(51) Int Cl.:
***G01V 7/00*** *(2006.01)* ***G01P 15/00*** *(2006.01)*
***G01B 5/24*** *(2006.01)* ***G01B 5/004*** *(2006.01)*
***G01B 7/28*** *(2006.01)*

(86) Numéro de dépôt international:
**PCT/EP2013/077264**

(87) Numéro de publication internationale:
**WO 2014/096114 (26.06.2014 Gazette 2014/26)**

(54) **PROCEDE DE DETERMINATION DE LA COURBURE D'UNE STRUCTURE DEFORMABLE TUBULAIRE DE TYPE CONDUITE PETROLIERE OFFSHORE ET STRUCTURE DEFORMABLE TUBULAIRE DE TYPE CONDUITE PETROLIERE OFFSHORE.**

VERFAHREN ZUM BESTIMMEN DER KRÜMMUNG EINER DEFORMIERBAREN ROHRSTRUKTUR DES TYPS ÖL OFFSHORELEITUNG UND DEFORMIERBARE ROHRSTRUKTUR DES TYPS ÖL OFFSHORELEITUNG.

METHOD FOR DEFINING THE CURVE OF A TUBULAR DEFORMABLE STRUCTURE OF THE TYPE OIL OFFSHORE PIPELINE AND DEFORMABLE STRUCTURE OF THE TYPE OIL OFFSHORE PIPELINE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2012 FR 1262320**

(43) Date de publication de la demande:
**28.10.2015 Bulletin 2015/44**

(73) Titulaire: **Technip France**
**92400 Courbevoie (FR)**

(72) Inventeurs:
- **CARMONA, Mickaël**
**F-38570 Tencin (FR)**
- **SPRYNSKI, Nathalie**
**F-38830 Saint Pierre D'allevard (FR)**
- **DELCROIX, Olivier**
**F-76000 Rouen (FR)**
- **LESTANC, Patrick**
**F-27500 Saint Germain Village (FR)**
- **JOUANET, Laurent**
**F-38880 Autrans (FR)**

(74) Mandataire: **Guérin, Jean-Philippe et al**
**Innovation Competence Group**
**310 bis avenue Berthelot**
**69008 Lyon (FR)**

(56) Documents cités:
**FR-A1- 2 610 100** **GB-A- 2 086 055**
**US-A1- 2008 211 808**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 936 047 B1

## Description

L'invention concerne un procédé de détermination de la courbure d'une structure déformable tubulaire de type conduite pétrolière offshore. L'invention concerne également une structure déformable tubulaire de type conduite pétrolière offshore instrumentée comportant un dispositif pour déterminer sa courbure.

La présente invention concerne notamment les structures tubulaires, en particulier les structures tubulaires destinées au transport d'hydrocarbures utilisées à distance des côtes. De telles tubulures sont typiquement des conduites sous-marines. L'exploitation offshore d'un gisement pétrolier ou gazier situé à grande profondeur est généralement faite à partir d'un système flottant de production situé à la surface, par exemple à partir d'un FPSO (« Floating Production Storage and Offloading ») ou d'une plateforme pétrolière flottante. Or, ces systèmes flottants ne sont pas statiques et se déplacent sous l'effet des courants, de la houle, des vagues et du vent. Par suite, les conduites sous-marines utilisées pour faire remonter les hydrocarbures depuis le fond marin jusqu'à la surface doivent être capables de se déformer pour accommoder les mouvements du système flottant.

Ces conduites sont donc conçues pour résister durablement (20 ans et plus) aux courbures et aux variations de courbures répétées qu'elles devront subir en service. En l'absence de mesure, les courbures sont estimées par calcul, ce qui conduit à prendre des marges de sécurité importantes et donc à sur-dimensionner inutilement les conduites. C'est pourquoi il est souhaitable de pouvoir mesurer en service la courbure d'une conduite, préférentiellement dans les zones les plus sollicitées en fatigue, ce que vise la présente invention.

Dans le cas d'une conduite montante (« riser » en anglais) reliant le fond marin à un support flottant, la zone la plus critique est généralement située en partie supérieure, à proximité de la connexion avec le support flottant. En effet, à cet endroit, la conduite subit d'une part une très forte tension liée à son poids pendu (couramment plusieurs centaines de tonnes), et d'autre part de fortes variations de courbure liées aux mouvements du support flottant. Ces chargements statique et dynamique combinés peuvent générer à cet endroit un phénomène de fatigue de la conduite. Selon la configuration de la conduite, il peut y avoir d'autres zones critiques, notamment à proximité du point de contact entre la conduite et le fond marin (« touch down point » en anglais). Les zones critiques sont généralement sous-marines et peu accessibles du fait d'un environnement hostile, ce qui complique le problème de mesure de courbure.

Le document WO2009/109745 décrit l'utilisation d'un inclinomètre fixé sur la conduite et d'un système de positionnement fixé sur le support flottant. Le document décrit la détermination de l'inclinaison relative de la conduite par rapport au support flottant. Cependant ce document ne fournit aucune information détaillée sur la mesure d'inclinaison, ni sur la façon de déterminer la courbure à partir des mesures effectuées.

Le document GB2086055 décrit un dispositif de calcul de la trajectoire d'un forage sous-terrain, comprenant une sonde parcourant l'intérieur du forage.

Le document FR2610100 décrit un dispositif de détermination des déformations et du trajet d'une canalisation, se présentant sous la forme d'un véhicule parcourant l'intérieur de la canalisation.

Le document US2008/211808 décrit un dispositif comprenant un jeu de capteurs reliés pour épouser la forme d'un objet. En fonction de l'inclinaison des capteurs, le dispositif calcule la forme de l'objet.

La présente invention vise à proposer une solution fiable et robuste de mesure de la courbure d'une structure tubulaire, permettant d'éviter de devoir accéder à cette structure tubulaire en environnement hostile.

L'invention porte ainsi sur un procédé de détermination de la courbure d'une structure déformable tubulaire de type conduite pétrolière offshore, comportant :

- la détermination de l'inclinaison de premier et deuxième objets rigides dans un repère de référence fixe (X, Y, Z) par rapport à la direction du champ de gravité terrestre, lesdits objets rigides étant fixés en des emplacements distincts le long de et sur ladite structure tubulaire, la détermination de l'inclinaison de chacun desdits objets comprenant :
  - la fourniture de plusieurs accéléromètres reliés de façon rigide par l'objet, chacun de ces accéléromètres étant apte à mesurer une accélération selon au moins une direction de mesure, les directions de mesure respectives d'au moins deux desdits accéléromètres étant non colinéaires ;
  - la mesure, par lesdits accéléromètres, des composantes du champ de gravité terrestre le long desdites directions de mesure, cette mesure fournissant, pour chacune desdites directions, une valeur de mesure, notée $m_j$ pour une direction de mesure d'indice i ;
  - la résolution de l'équation matricielle suivante pour déterminer l'inclinaison $\Phi$ de l'objet (54) par rapport au repère de référence :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure $m_j$, A une matrice définie par les directions de mesure des accéléromètres dans un référentiel solidaire de l'objet, et η un angle de rotation de ce référentiel solidaire par rapport au référentiel fixe ;

- la détermination de la courbure de la structure tubulaire à partir des inclinaisons déterminées pour les premier et deuxième objets.

Selon une variante, au moins deux accéléromètres de chacun desdits objets sont distants.
Selon encore une variante, la résolution de l'équation matricielle lors dune détermination d'une inclinaison comprend la minimisation d'un critère L(Φ, η) défini par l'équation suivante :

$$L(\phi,\eta) = \left\| M - A \begin{bmatrix} \cos(\phi) \\ -\sin(\phi)\sin(\eta) \\ -\sin(\phi)\cos(\eta) \end{bmatrix} \right\|^2$$

Selon une autre variante, lesdits accéléromètres de chacun desdits objets sont au moins au nombre de quatre, sont répartis sur un cercle et présentent chacun une direction de mesure définie par le rayon reliant cet accéléromètre au centre du cercle.
Selon encore une autre variante, lesdits accéléromètres sont répartis de façon uniforme sur ledit cercle.
Selon une variante, les accéléromètres présentent un bruit statistique de mesure gaussien et centré, la résolution comprenant la minimisation d'un critère L(Φ, η) défini par l'équation suivante :

$$L(\theta,\eta) = \left(\sin(\phi)\underline{f}(\eta) - \underline{m}\right)^T \times \underline{\Gamma}^{-1} \times \left(\sin(\phi)\underline{f}(\eta) - \underline{m}\right)$$

avec $\underline{f}(\eta)$ un vecteur dont la i-ième composante est égale à $-\sin(\alpha_i+\eta)$, avec $\underline{\Gamma}$ une matrice de covariance correspondant aux bruits statistiques de mesure des accéléromètres pour lesdites directions de mesure.
Selon encore une variante, les bruits statistiques des accéléromètres sont statistiquement indépendants, et la matrice de covariance $\underline{\Gamma}$ est une matrice diagonale et définie positive dont le i-ième coefficient est égal à la variance $\sigma_i^2$ pour la i-ième direction de mesure.
Selon une autre variante, ladite structure tubulaire présente une accélération propre maximale par rapport au repère de référence au moins dix fois inférieure à l'amplitude du champ de gravité g, de préférence au moins vingt fois inférieure à l'amplitude du champ de gravité g durant lesdites mesures.
Selon encore une autre variante, lesdites inclinaisons utilisées pour la détermination de ladite courbure sont basées sur des mesures simultanées des accéléromètres des premier et deuxième objets.
Selon une variante, la courbure de la structure tubulaire entre les premier et deuxième objets est déterminée au moyen de la formule suivante :

$$k(S) = \frac{d\phi(s)}{ds}$$

où k(S) est la courbure au point S d'abscisse curviligne s entre les premier et deuxième objets, ϕ(s) étant l'inclinaison de la structure tubulaire au point S d'abscisse curviligne s.
L'invention porte par ailleurs sur une structure déformable tubulaire, de type conduite pétrolière offshore, comprenant :

- des premier et deuxième objets rigides fixés le long et sur la structure ;

- pour chacun desdits objets, plusieurs accéléromètres reliés de façon rigide par leur objet respectif, chacun de ces accéléromètres étant apte à mesurer une composante du champ de gravité terrestre selon au moins une direction de mesure pour fournir une valeur de mesure notée $m_j$ pour une direction de mesure d'indice i, les directions de mesure respectives d'au moins deux desdits accéléromètres étant non colinéaires ;
- un dispositif de calcul programmé pour :

  - déterminer l'inclinaison Φ de chacun desdits premier et deuxième objets par rapport à un repère de référence fixe par rapport à la direction du champ de gravité terrestre, par résolution de l'équation matricielle suivante :

$$M = A \begin{bmatrix} \cos(\phi) \\ -\sin(\phi)\sin(\eta) \\ -\sin(\phi)\cos(\eta) \end{bmatrix}$$

  avec M le vecteur dont la i-ième composante est définie par la mesure $m_j$, A une matrice définie par les directions de mesure des accéléromètres dans un référentiel solidaire dudit objet, et η un angle de rotation de ce référentiel solidaire par rapport au référentiel fixe ;
  - déterminer la courbure de la structure tubulaire entre lesdits premier et deuxième objets à partir des inclinaisons déterminées pour les premier et deuxième objets.

D'autres caractéristiques et avantages de l'invention ressortiront clairement de la description qui en est faite ci-après, à titre indicatif et nullement limitatif, en référence aux dessins annexés, dans lesquels :

- la figure 1 illustre schématiquement un objet comportant un dispositif de mesure de l'inclinaison de cet objet, cet objet présentant une inclinaison nulle par rapport à une direction verticale ;
- la figure 2 illustre schématiquement un dispositif de calcul de l'inclinaison de l'objet de la figure 1 ;
- la figure 3 est un organigramme d'un procédé d'utilisation du dispositif de la figure 1 ;
- la figure 4 illustre schématiquement l'objet de la figure 1 dans une position inclinée par rapport à la direction verticale.
- la figure 5 illustre schématiquement, selon une vue de profil, une portion d'une structure tubulaire comportant deux objets selon la figure 1 ;
- les figures 6 et 7 illustrent schématiquement, selon des vues de profil une portion de structure tubulaire instrumentée dans deux positions différentes, d'une part une position courbée et d'autre part une position rectiligne.

Dans la présente demande, le terme 'structure tubulaire' couvre à la fois les conduites flexibles, les conduites rigides et les ombilicaux utilisés dans le domaine de l'exploitation pétrolière ou gazière, et d'autre part les accessoires du type raidisseur ou limiteur de courbure pouvant être fixés autour des conduites ou des ombilicaux. Ces conduites peuvent être de type flexible ou rigide en fonction de l'application.

Les conduites pétrolières offshore sont généralement utilisées pour transporter les hydrocarbures extraits d'un gisement, mais elles peuvent aussi être utilisées pour transporter de l'eau de mer pressurisée destinée à être injectée dans un gisement en vue d'augmenter la quantité d'hydrocarbures extraite de ce dernier. Le diamètre intérieur de ces conduites pétrolières est typiquement compris entre 50mm et 500mm. Elles peuvent être utilisées à grande profondeur (couramment à plus de 1000m) et sont dans ce cas conçues pour résister à une pression externe très élevée. La pression des hydrocarbures transportés est couramment supérieure à 10 MPa et peut parfois atteindre 100 MPa. En outre, la température des hydrocarbures transportés est parfois supérieure à 100°C, par exemple de l'ordre de 120°C.

Les conduites pétrolières flexibles ont généralement une structure complexe. Elles comportent au moins une couche tubulaire flexible étanche renforcée par au moins un profilé enroulé hélicoïdalement. En général, la couche tubulaire flexible étanche est un tube en matériau polymère, et les profilés de renfort sont des fils en acier ou en matériau composite. De telles conduites flexibles sont notamment décrites dans le document normatif API RP 17B « Recommended Practice for Flexible Pipe» publié par l'American Petroleum Institute. Elles sont généralement utilisées dans les zones où une grande flexibilité est requise, notamment dans les zones très dynamiques des colonnes montantes.

Les conduites rigides sont généralement réalisées par assemblage par soudage ou vissage d'éléments tubulaires rigides en acier de forte épaisseur. Elles peuvent en outre comporter d'autres couches, notamment des couches d'isolation thermique ou de protection contre la corrosion. Les conduites rigides peuvent aussi être réalisées en matériau composite, par exemple à partir d'un tube étanche de faible épaisseur renforcé par un chemisage en matériau composite. Les conduites rigides sont normalement réservées aux applications statiques, mais elles peuvent aussi être utilisées pour certaines applications faiblement dynamiques, notamment en combinaison avec des supports flottants présentant

une grande stabilité.

Des conduites flexibles cryogéniques sont utilisées pour transporter du gaz naturel liquéfié (« GNL » en Français, « LNG » en anglais), typiquement depuis une unité de liquéfaction vers un navire de transport ou depuis un navire de transport vers une unité de stockage. La couche tubulaire flexible étanche de ces conduites flexibles est généralement un tube métallique ondulé de faible épaisseur.

Les ombilicaux sont des structures tubulaires comportant plusieurs composants parmi lesquels au moins un tube, les autres composants pouvant être des tubes, des câbles électriques, ou des câbles à fibre optique. Les composants sont assemblés entre eux par enroulement en hélice ce qui confère une grande flexibilité à l'ensemble. Les ombilicaux sont généralement utilisés pour piloter à partir de la surface des installations sous-marines du type tête de puits, vanne ou pompe. Ils peuvent aussi avoir d'autres fonctions et notamment servir à injecter dans les conduites pétrolières des fluides facilitant l'écoulement du pétrole ou encore des inhibiteurs de corrosion. Les ombilicaux sont notamment décrits dans le document normatif API RP 17E « Specification for Subsea Umbilicals » publié par l'American Petroleum Institute.

Le procédé de détermination de la courbure d'une structure tubulaire selon la présente invention est basé sur des mesures d'inclinaison pouvant être réalisées uniquement à l'aide d'accéléromètres. Les accéléromètres sont des capteurs robustes et économiques, ce qui constitue un premier avantage de l'invention. De plus, le procédé ne suppose aucune connaissance préalable sur la position angulaire absolue des accéléromètres par rapport à un repère de référence, ce qui permet d'éviter d'avoir à faire un tel étalonnage des mesures une fois la structure tubulaire installée sur site. En effet, les structures tubulaires visées par la présente invention sont généralement très difficiles d'accès une fois installées en mer. Par suite, un étalonnage des mesures d'inclinaison basé sur une comparaison avec d'autres mesures de référence effectuées sur site après installation serait complexe et prohibitive à mettre en œuvre. La suppression d'un tel étalonnage constitue donc un deuxième avantage de l'invention. En outre, les mesures d'inclinaison effectuées selon l'invention s'avèrent précises même pour de faibles valeurs d'inclinaison, ce qui permet de déterminer une courbure et une fatigue d'une tubulure avec une grande précision, ce qui constitue un troisième avantage de l'invention.

On va dans un premier temps décrire un procédé de calcul d'inclinaison mis en œuvre pour réaliser un calcul de courbure selon l'invention.

La figure 1 représente un objet 2 instrumenté, comportant un dispositif 4 configuré pour déterminer l'inclinaison de l'objet 2 par rapport à une direction de référence D. La direction de référence D est la direction selon laquelle s'applique la gravité à laquelle est soumis l'objet 2. Par exemple, l'objet 2 est soumis à la gravité terrestre ; la direction de référence D est la direction du champ de gravité terrestre, représentée par le vecteur g et définissant une direction verticale.

L'objet 2 est dans l'exemple un solide considéré comme indéformable, c'est-à-dire que la distance séparant entre eux des points quelconques de l'objet 2 ne varie pas lorsque cet objet 2 subit un déplacement. Cet objet 2 est ici de forme cylindrique. On définit ici un repère orthonormé défini par les vecteurs U, V, W et solidaire de l'objet 2, U étant le vecteur de la direction de l'axe du cylindre (dans un cas général, on peut associer de façon arbitraire un repère orthonormé, à un objet pas nécessairement cylindrique). Pour simplifier, cet objet 2 est dessiné en pointillés sur la figure 1 (et sur la figure 4). L'objet 2 peut par exemple être réalisé sous forme de collier indéformable destiné à être fixé sur une structure tubulaire déformable

Dans cette description, pour caractériser l'inclinaison de l'objet 2, on définit un repère orthonormé R, dit « repère de référence ». Ce repère R est composé de trois directions orthonormales X, Y et Z. La direction verticale, notée Z, est parallèle à la direction D du champ de gravité g dans l'exemple. Le champ de gravité g sera exprimé par le vecteur [0 ; 0 ; 1] dans le repère R. L'inclinaison de l'objet 2 est ici définie comme étant l'angle formé entre la direction D et l'axe U suivant lequel s'étend l'objet 2. Sur la figure 1, l'objet 2 est illustré avec une inclinaison nulle, les directions D et U sont donc parallèles.

On va dans un premier temps étudier un cas général de mise en œuvre de l'invention.

Les vecteurs unitaires du repère orthonormé solidaire de l'objet 2 peuvent être définis de la façon suivante dans le repère R. :

$$U = \begin{bmatrix} \sin(\phi)\cos(\theta) \\ \sin(\phi)\sin(\theta) \\ \cos(\phi) \end{bmatrix}$$

$$V = \begin{bmatrix} \cos(\eta)\sin(\theta) + \sin(\eta)\cos(\phi)\cos(\theta) \\ -\cos(\eta)\cos(\theta) + \sin(\eta)\cos(\phi)\sin(\theta) \\ -\sin(\phi)\sin(\eta) \end{bmatrix}$$

$$W = U \wedge V$$

Avec $\Phi$ l'inclinaison de l'objet 2 par rapport à la direction D, $\theta$ l'azimuth de U, et $\eta$ un angle de rotation du référentiel solidaire de l'objet 2 par rapport au référentiel R, $\wedge$ l'opérateur produit vectoriel.

Le dispositif 4 est donc configuré pour déterminer l'inclinaison $\Phi$ de l'objet 2 par rapport à la direction D. $\eta$ est un paramètre intermédiaire, utilisé dans la formalisation du problème. Ce dispositif 4 comporte au moins deux accéléromètres. Ce dispositif ne fait cependant pas appel à un magnétomètre ou à un gyromètre pour déterminer cette inclinaison. Chacun de ces accéléromètres est configuré pour mesurer une accélération selon au moins une direction de mesure. Ces accéléromètres sont :

- liés entre eux par une liaison rigide ;
- aptes à mesurer le champ de gravité terrestre et pas seulement l'accélération relative de l'objet 2 ;
- placés de façon à ce qu'au moins deux accéléromètres présentent des directions de mesure respectives qui ne sont pas mutuellement colinéaires. Avantageusement, l'angle entre ces directions est au moins égal à 30°, de préférence au moins égal à 45°, et encore plus préférentiellement au moins à 60°. Les coordonnées des directions de mesure ou de sensibilité des accéléromètres sont connues dans le repère U, V, W. Les accéléromètres sont avantageusement distants pour diminuer les incertitudes de l'estimation des mesures.

Dans cet exemple, le dispositif 4 comporte N accéléromètres $A_1$ à $A_N$, où N est un nombre entier avantageusement supérieur ou égal à trois, quatre ou à sept ou à dix. Ces accéléromètres sont ici mono-axiaux, c'est-à-dire que chaque accéléromètre ne possède qu'une seule direction de mesure. Ces accéléromètres $A_1$ à $A_N$ ont ici une liaison encastrement avec l'objet 2. L'objet 2 forme ici une liaison rigide entre les accéléromètres $A_1$ à $A_N$.

L'invention peut bien entendu également être mise en œuvre en incluant un ou plusieurs accéléromètres à 2 ou 3 directions de mesure parmi les accéléromètres. De tels accéléromètres seront traités comme plusieurs accéléromètres mono-axiaux parmi les accéléromètres $A_1$ à $A_N$ et ayant chacun une direction de mesure. Dans cette description, on désigne le i-ième accéléromètre par la référence $A_i$ où i est un nombre entier supérieur ou égal à 1 et inférieur ou égal à N. La direction de mesure de ce i-ième accéléromètre mono-axial est notée $v_i$. Dans le cas général, on fera référence à ce i-ième accéléromètre pour désigner des propriétés générales desdits accéléromètres.

Pour simplifier, l'emplacement de chacun de ces accéléromètres est matérialisé par un emplacement ponctuel. Pour simplifier, sur les figures 1 et 4, seuls les accéléromètres $A_1$, $A_2$, $A_j$ et $A_N$ sont illustrés.

L'accélération mesurée par chacun de ces accéléromètres correspond à la projection géométrique du champ de gravité g sur la direction de mesure de cet accéléromètre.

La direction de mesure $v_i$ de n'importe lequel des accéléromètres $A_i$ est déterminée par l'équation suivante, avec des coefficients $a_{i,1}$, $a_{i,2}$ $a_{i,3}$ étant des coefficients connus par hypothèse, invariants au cours du temps du fait de la liaison rigide entre les accéléromètres $A_1$ à $A_N$.

$$v_i = a_{i,1}U + a_{i,2}V + a_{i,3}W$$

Chaque accéléromètre effectue ainsi une mesure $m_i$ suivante, correspondant à la projection du champ de gravité sur sa direction de mesure :

$$m_i = a_{i,1}(U^T g) + a_{i,2}(V^T g) + a_{i,3}(W^T g)$$

Ainsi, $m_i = v_i^T g$, où T désigne la transposition matricielle.

On définit par M le vecteur $[m_1, \ldots m_N]^T$ contenant les différentes mesures des accéléromètres.

On introduit une matrice A définie par :

$$A = \begin{bmatrix} a_{1,1} & a_{1,2} & a_{1,3} \\ a_{2,1} & a_{2,2} & a_{2,3} \\ \dots & \dots & \dots \\ a_{N,1} & a_{N,2} & a_{N,3} \end{bmatrix}$$

En notant que $U^Tg = \cos(\Phi)$, $V^Tg = -\sin(\Phi)\sin(\eta)$ et $W^Tg = -\sin(\Phi)\cos(\eta)$, on peut réaliser la concaténation des équations précédentes sous la forme suivante :

$$M = A \begin{bmatrix} \cos(\phi) \\ -\sin(\phi)\sin(\eta) \\ -\sin(\phi)\cos(\eta) \end{bmatrix}$$

On peut donc retrouver les angles $\Phi$ et $\eta$ lorsque la matrice A (dont les coefficients sont connus) est au moins de rang 2, c'est-à-dire lorsqu'au moins deux directions de mesure sont non colinéaires.

La résolution de cette équation matricielle peut être réalisée en minimisant le critère suivant :

$$L(\phi, \eta) = \left\| M - A \begin{bmatrix} \cos(\phi) \\ -\sin(\phi)\sin(\eta) \\ -\sin(\phi)\cos(\eta) \end{bmatrix} \right\|^2$$

|| . || définissant la norme euclidienne de vecteurs à trois dimensions. Cette résolution reste valable même lorsque l'équation matricielle de M est perturbée par des incertitudes d'amplitudes au moins 10 fois inférieures à l'amplitude du champ de gravité g.

La minimisation de ce critère L permet de maximiser la fonction de vraisemblance du système. La résolution fournit des valeurs $\Phi_0$ et $\eta_0$ minimisant le critère L. Des algorithmes de minimisation sont connus de l'homme du métier.

Un tel procédé de détermination de l'inclinaison permet ainsi d'obtenir une bonne précision dès l'utilisation de deux directions de mesure et cela sans magnétomètre. Une telle inclinaison est obtenue par rapport à l'axe U, dans n'importe quel plan incluant cet axe U. En outre, un tel procédé permet en pratique d'obtenir une bonne précision de détermination de l'inclinaison, dès de faibles valeurs d'inclinaison, ce qui s'avère intéressant pour des applications où l'inclinaison varie dans une plage relativement limitée. Par comparaison, un gyroscope ne fournit pas de mesure fiable pour une faible valeur d'inclinaison et est sensible au bruit et à l'environnement. Etant données les contraintes appliquées sur une conduite sous-marine, la connaissance précise de l'inclinaison d'une section de cette conduite dès les plus petites déviations par rapport à la verticale est prépondérante en vue de calculer de façon fiable la courbure de celle-ci et la durée de vie restante vis-à-vis du critère de fatigue.

On va maintenant décrire une mise en œuvre spécifique de la détermination de l'inclinaison illustrée en référence à la figure 1, et s'avérant particulièrement avantageuse.

Les accéléromètres sont ici positionnés sur un cercle C, passant par chacun des accéléromètres et tel que les directions de mesure des accéléromètres soient contenues dans le plan incluant ce cercle. D'autre part, la normale au plan incluant le cercle C coïncide avec la direction définie par le vecteur U. Par exemple, ces accéléromètres sont des accéléromètres commercialisés par la société « Colibrys » sous la référence commerciale « MS9002 ».

La direction de mesure de l'accéléromètre A1 est choisie colinéaire à l'axe V pour cet exemple. Ici, la direction de mesure $v_i$ du i-ième accéléromètre s'étend radialement depuis le centre du cercle C. Cette direction $v_i$ est ici représentée par un vecteur, dont la direction est une droite passant par l'emplacement ponctuel du i-ième accéléromètre et par le centre du cercle C.

La direction de mesure $v_i$ s'écrit :

$$v_i = \cos(\alpha_i)V + \sin(\alpha_i)W$$

Avec $\alpha_i$ l'angle de positionnement connu de l'accéléromètre $A_i$ par rapport à un accéléromètre de référence ($A_1$ dans cet exemple) autour de l'axe U.

Dans cet exemple, la matrice A s'exprime alors :

$$A = \begin{bmatrix} 0 & \cos(\alpha_1) & \sin(\alpha_1) \\ 0 & \cos(\alpha_2) & \sin(\alpha_2) \\ \dots & \dots & \dots \\ 0 & \cos(\alpha_N) & \sin(\alpha_N) \end{bmatrix}$$

Le vecteur de mesure M s'exprime alors avec l'expression théorique suivante :

$$M = -\sin(\phi) \begin{bmatrix} \sin(\alpha_1 + \eta) \\ \sin(\alpha_2 + \eta) \\ \dots \\ \sin(\alpha_N + \eta) \end{bmatrix}$$

La résolution de cette équation matricielle peut être réalisée en minimisant le critère suivant :

$$L(\phi, \eta) = \left\| M + \sin(\phi) \begin{bmatrix} \sin(\alpha_1 + \eta) \\ \sin(\alpha_2 + \eta) \\ \dots \\ \sin(\alpha_N + \eta) \end{bmatrix} \right\|^2$$

Ici, le signal de mesure $m_i$ est entaché d'un bruit statistique pour chacun des accéléromètres. Le signal de mesure se décompose donc en deux termes et est de la forme suivante : M= sin(Φ).f(η)+b, avec b un vecteur représentatif de l'erreur de mesure du fait des bruits statistiques $b_i$ respectifs des capteurs $A_i$, $\underline{f}(\eta)$ étant un vecteur dont la i-ième composante est égale à $-\sin(\alpha_i+\eta)$.

Dans cet exemple, chaque bruit statistique est un processus statistique gaussien et centré, ce qui correspond à une bonne approximation de la réalité pour un grand nombre d'accéléromètres. La variance de ce bruit statistique, pour le i-ième accéléromètre, est notée $\sigma_i^2$. On définit la matrice de covariance $\underline{\Gamma}$ associée à ce processus statistique.

Les bruits statistiques respectifs des N accéléromètres sont ici statistiquement indépendants. Ainsi, dans cet exemple, cette matrice $\underline{\Gamma}$ est une matrice diagonale et définie positive, dont le i-ième coefficient diagonal est égal à la variance $\sigma_i^2$ du i-ième accéléromètre.

La résolution de l'équation matricielle peut alors être réalisée en minimisant le critère suivant :

$$L(\phi,\eta) = \left(\sin(\phi)\underline{f}(\eta) - \underline{m}\right)^T \times \underline{\Gamma^{-1}} \times \left(\sin(\phi)\underline{f}(\eta) - \underline{m}\right)$$

Avantageusement, pour réduire l'erreur totale sur l'inclinaison de l'objet 2 provenant du bruit statistique des accéléromètres individuels, ces accéléromètres sont placés sur le cercle C de la manière suivante :

- si les variances respectives des accéléromètres satisfont la condition suivante (dite condition d'optimalité) :

$$\sigma_{\max}^{-2} \leq \frac{1}{2} Tr(\underline{\Gamma}^{-1})$$

où $\sigma_{max}^{-2}$ est l'inverse maximal des inverses $\sigma_j^{-2}$ des variances des accéléromètres, Tr désigne l'opérateur mathématique trace et $\underline{\Gamma}$ est la matrice de covariance, alors les accéléromètres sont placés sur le cercle C de manière à satisfaire les relations suivantes :

$$\sum_{j=1}^{N} \sigma_j^{-2} \sin(2\alpha_j) = 0$$

et

$$\sum_{j=1}^{N} \sigma_j^{-2} \cos(2\alpha_j) = 0$$

- si les variances respectives des accéléromètres ne satisfont pas la condition d'optimalité, alors l'accéléromètre présentant la variance d'inverse maximale $\sigma_{max}^{-2}$ est placé à un emplacement quelconque sur le cercle C et tous les autres accéléromètres sont placés, sur ce cercle C, à un angle de 90° de cet accéléromètre.

Le dispositif 4 comporte en outre un dispositif de calcul 10, configuré pour calculer automatiquement l'inclinaison de l'objet 2. La figure 2 représente schématiquement ce dispositif 10. Ce dispositif 10 comporte :

- un support d'enregistrement 12 d'informations,
- un calculateur 14 électronique programmable,
- une interface 16 d'échange de données.

Le calculateur 14 est notamment programmé pour exécuter des informations contenues sur le support 12. Le support 12 contient des instructions pour l'exécution du procédé de la figure 3. L'interface 16 permet notamment l'acquisition, par le calculateur 14, des valeurs de mesures m(j) fournies par les accéléromètres du dispositif 4. Par exemple, l'interface 16 comporte un bus de données, tel qu'un bus série (pour « Sériai Peripheral Interface » en langue anglaise), relié électriquement aux accéléromètres $A_1$ à $A_N$.
De nombreux autres modes de réalisation sont possibles.
L'objet 2 peut présenter une forme différente. L'inclinaison de l'objet 2 peut être définie autrement que par rapport à l'axe U.
Les accéléromètres ne sont pas forcément tous mono-axiaux. Par exemple, les accéléromètres sont des accéléromètres tri-axiaux, tels ceux commercialisés par la société « STMicroelectronics » sous la référence commerciale « LSM303DLH ».
Les accéléromètres du dispositif 4 peuvent être placés différemment par rapport à l'objet 2. Notamment, ces accéléromètres peuvent présenter une autre configuration spatiale que le cercle C.
Un accéléromètre peut ne pas présenter de bruit statistique. Dans ce cas, pour chaque direction de mesure $v_j$ associée à cet accéléromètre, le bruit b(j) est nul et les coefficients $\sigma_j^2$ qui apparaissent dans l'estimateur L sont fixés à 1.
On combine au moins deux objets 2 pour déterminer la courbure d'une structure tubulaire déformable.
La figure 5 représente à cet effet une portion d'une structure tubulaire déformable 40 sur laquelle sont placés des objets instrumentés 42 et 44, par exemple identiques à l'objet 2. Des propriétés de déformation de la structure 40 peuvent ainsi être indirectement calculées à partir de l'inclinaison de chacun des objets 42 et 44. On peut considérer que les objets 42 et 44 sont indéformables par rapport à la structure tubulaire 40 si les déformations induites sur ces objets sont négligeables par rapport aux déplacements relatifs entre ces objets, déplacements dus aux déformations

de la structure tubulaire 40.

Dans cet exemple, la structure tubulaire 40 est déformable par flexion. Les objets 42 et 44 sont ici maintenus solidaires de la structure 40 par une liaison encastrement. Les objets 42 et 44 sont par exemple des colliers métalliques rigides serrés autour de la structure tubulaire 40. Ces objets 42 et 44 sont par exemple connectés, par un bus de données, à une unité de calcul configurée pour déterminer la courbure d'une direction médiane 46 de la structure 40, à partir des inclinaisons mesurées simultanément par chacun des objets 42 et 44. Pour simplifier, ce bus de données et cette unité de calcul ne sont pas illustrés sur la figure 5. L'inclinaison de ces objets 42 et 44 est ici définie par rapport à la direction du champ de gravité g, ici verticale.

Cette unité de calcul est notamment programmée pour :

- évaluer l'inclinaison en tout point de la structure 40, à partir des mesures simultanées fournies par les objets 42 et 44, par exemple, au moyen de méthodes d'interpolation telles que l'interpolation par splines cubiques ;
- calculer, à partir de la connaissance de cette inclinaison en tout point de la structure 40, la courbure k en tout point de la direction 46 de la structure 40, par exemple au moyen de la formule suivante (en supposant que la direction médiane de la structure n'est pas gauche) :

$$k(S) = \frac{d\phi(s)}{ds}$$

où k(S) est la courbure de la direction 46 au point S d'abscisse curviligne s (l'origine des abscisses curvilignes étant fixée arbitrairement, Φ(s) étant l'inclinaison de la structure 40 au point S d'abscisse curviligne s.

Ces exemples de méthodes d'interpolation et de reconstruction sont par exemple décrits dans le chapitre 1 de la thèse de doctorat de N. Sprynski, « Reconstruction de courbes et surfaces à partir de données tangentielles », Université Joseph Fourier, Grenoble, France, 2007.

Lorsque plusieurs objets 42, 44 sont utilisés conjointement sur une même structure 20 pour déterminer des propriétés de cette structure 40, alors le dispositif de calcul 10 peut présenter une forme différente. Par exemple, ce dispositif 10 n'est pas forcément incorporé dans chacun des objets 42, 44. Un unique dispositif 10 peut alors être placé à l'extérieur de ces objets 42, 44, dans une unité de traitement de données configurée pour recevoir les données de mesure des accéléromètres des objets 42 et 44.

Les figures 6 et 7 représentent une même portion de structure tubulaire 50 dans deux positions différentes. A la figure 6, la structure tubulaire 50 est courbée et présente localement un rayon de courbure égal à R. A la figure 7, la structure tubulaire 50 est droite (rayon de courbure infini). Sur cette structure 50, des colliers indéformables instrumentés 54 et 56 sont disposés, par exemple identiques à l'objet 2.

Les colliers indéformables instrumentés 54, 56 sont serrés autour de la structure tubulaire 50 de sorte qu'ils ne puissent pas glisser le long de celle-ci lorsque cette dernière est fléchie. La distance L séparant les centres des deux colliers 54, 56, distance mesurée le long de l'axe de la structure tubulaire 50 est donc constante et indépendante de la courbure de la structure tubulaire 50.

Les inclinaisons Φ1 et Φ2 des colliers indéformables 54, 56 sont d'abord déterminées selon le procédé défini précédemment. Ensuite, la courbure locale k de la structure tubulaire 50 peut être calculée à partir de l'inclinaison de chacun des colliers 54 et 56 en utilisant par exemple la formule approchée suivante (avec R le rayon des colliers indéformables 54 et 56) :

$$k = \frac{1}{R} = \frac{d\phi}{ds} \approx \frac{\phi 2 - \phi 1}{L}$$

où les inclinaisons Φ1 et Φ2 sont exprimées en radians, R et L sont exprimés en mètres, et la courbure k est exprimée en $m^{-1}$.

Il ressort de cette formule que l'erreur d'estimation de la courbure est d'autant plus faible que les colliers 54 et 56 sont rapprochés. Ainsi, avantageusement, la distance L séparant les deux colliers 54, 56 est inférieure à 1 mètre, et préférentiellement inférieure à 50 centimètres.

Un exemple de détermination de la courbure d'une structure tubulaire 50 va maintenant être décrit en détail, en référence à l'organigramme de la figure 3.

Les informations des matrices A respectives des accéléromètres des deux colliers 54 et 56 sont définies au préalable, éventuellement avec les propriétés de bruit statistique de ces accéléromètres.

A un instant t, la structure tubulaire 50 est à une position initiale avec une configuration donnée. Puis, lors

d'une étape 22, la structure tubulaire subit une déformation vers une nouvelle configuration. Durant cette déformation, chaque collier 54 et 56 connaît un déplacement de sa position initiale vers une position dans laquelle il présente une nouvelle inclinaison par rapport à la direction de référence D. Par exemple, les colliers 54 et 56 subissent des rotations respectives par rapport au repère R. Ici, à l'issue de ces rotations, les colliers 54 et 56 présentent des angles d'inclinaison respectifs notés Φ1 et Φ2, non nuls, par rapport à la direction D (Figure 4).

Lors d'une étape 24, les accélérations subies par les accéléromètres des colliers 54 et 56 sont mesurées. Chaque accéléromètre fournit une mesure $m_i$ d'accélération.

Lors de la mesure, la structure tubulaire 50 est dans un état quasi-statique, puisque la détermination des inclinaisons utilise une résolution basée sur les mesures du champ de gravité g par les différents accéléromètres. On peut considérer que la structure tubulaire 50 est dans un état quasi-statique lorsque l'accélération propre (c'est-à-dire correspondant au mouvement de la structure) maximale de la structure tubulaire 50 par rapport au repère R est au moins dix fois ou vingt fois ou cinquante fois inférieure à l'amplitude de la gravité g. Ainsi, la mesure est adaptée pour une structure tubulaire 50 dont les conditions normales d'utilisation sont de type quasi-statique.

Lors d'une étape 26, les inclinaisons respectives des colliers 54 et 56 sont déterminées automatiquement à partir des mesures $m_i$. Durant cette étape, une opération 28 inclut la résolution de l'équation du type

$$M = A \begin{bmatrix} \cos(\phi) \\ -\sin(\phi)\sin(\eta) \\ -\sin(\phi)\cos(\eta) \end{bmatrix}$$

pour chaque collier 54 et 56.

Lors d'une étape 30, les inclinaisons déterminées à l'étape 26 sont utilisées pour calculer la courbure locale (entre les colliers 54 et 56) de la structure tubulaire 50.

Des étapes du procédé de la figure 3 peuvent être exécutées dans un ordre différent et/ou peuvent être simultanées.

Lors de l'étape 20, la structure tubulaire 50 n'est pas forcément placée dans un état initial présentant une inclinaison nulle, mais peut présenter une inclinaison non nulle. Le déplacement (étape 22) de la structure tubulaire 50 et la mesure des accélérations (étape 24) peuvent être concomitants, à condition que la structure tubulaire 50 reste quasi-statique pendant son déplacement.

Le calcul de la courbure a été décrit sur la base de deux colliers rigides. On peut cependant également envisager d'utiliser un plus grand nombre de colliers rigides répartis sur une structure tubulaire, pour affiner le calcul de courbure de la structure tubulaire.

L'invention ne se limite pas au cas où les objets rigides équipés d'accéléromètres et fixés en des emplacements distincts le long de la structure tubulaire sont des colliers rigides serrés autour de cette dernière. Ces objets peuvent aussi être encastrés à l'intérieur de la structure tubulaire. Ainsi, par exemple, dans le cas où structure tubulaire est une conduite, ces objets peuvent être encastrés à l'intérieur de la paroi de la conduite.

Dans le cas d'une conduite flexible montante (« flexible riser » en anglais) la partie supérieure est couramment équipée d'un raidisseur afin de limiter les variations de courbures. Afin de mesurer la courbure de la conduite au niveau de cette zone critique, les objets rigides équipés d'accéléromètres peuvent être soit fixés autour du raidisseur, soit encastrés à l'intérieur du raidisseur, soit fixés autour de la conduite au niveau du raidisseur, soit encastrés à l'intérieur de la paroi de la conduite au niveau du raidisseur, avec toutes les combinaisons possibles. On peut par exemple utiliser des colliers rigides instrumentés serrés autour de la conduite elle-même, puis chemisés localement sur toute la longueur du raidisseur par une gaine polymérique présentant un diamètre extérieur légèrement inférieur au diamètre intérieur du raidisseur, de sorte que le raidisseur puisse s'adapter autour de la conduite équipée de ces colliers et de ce chemisage local.

## Revendications

1. Procédé de détermination de la courbure d'une structure déformable tubulaire de type conduite pétrolière offshore (50), **caractérisé en ce que** ce procédé comporte :

    - la détermination de l'inclinaison de premier et deuxième objets rigides (54, 56) dans un repère de référence fixe (X, Y, Z) par rapport à la direction du champ de gravité terrestre, lesdits objets rigides étant fixés en des

emplacements distincts le long de et sur ladite conduite pétrolière offshore, la détermination de l'inclinaison de chacun desdits objets comprenant :

- la fourniture de plusieurs accéléromètres ($A_1$,...$A_N$) reliés de façon rigide par l'objet, chacun de ces accéléromètres étant apte à mesurer une accélération selon au moins une direction de mesure (vj), les directions de mesure respectives d'au moins deux desdits accéléromètres étant non colinéaires ;
- la mesure, par lesdits accéléromètres, des composantes du champ de gravité terrestre le long desdites directions de mesure, cette mesure fournissant, pour chacune desdites directions, une valeur de mesure, notée $m_j$ pour une direction de mesure d'indice i ;
- la résolution de l'équation matricielle suivante pour déterminer l'inclinaison $\Phi$ de l'objet (54) par rapport au repère de référence :

$$M = A \begin{bmatrix} \cos(\phi) \\ -\sin(\phi)\sin(\eta) \\ -\sin(\phi)\cos(\eta) \end{bmatrix}$$

avec M le vecteur dont la i-ième composante est définie par la mesure $m_j$, A une matrice définie par les directions de mesure des accéléromètres dans un référentiel solidaire de l'objet, et $\eta$ un angle de rotation de ce référentiel solidaire par rapport au référentiel fixe ;
- la détermination de la courbure de la structure tubulaire à partir des inclinaisons déterminées pour les premier et deuxième objets (54, 56).

**2.** Procédé selon la revendication 1, dans lequel au moins deux accéléromètres de chacun desdits objets (54, 56) sont distants.

**3.** Procédé selon la revendication 1 ou 2, dans lequel la résolution de l'équation matricielle lors dune détermination d'une inclinaison comprend la minimisation d'un critère $L(\Phi, \eta)$ défini par l'équation suivante :

$$L(\phi,\eta) = \left\| M - A \begin{bmatrix} \cos(\phi) \\ -\sin(\phi)\sin(\eta) \\ -\sin(\phi)\cos(\eta) \end{bmatrix} \right\|^2$$

**4.** Procédé selon l'une quelconque des revendications précédentes, dans lequel lesdits accéléromètres ($A_1$,...$A_N$) de chacun desdits objets (54, 56) sont au moins au nombre de quatre, sont répartis sur un cercle (C) et présentent chacun une direction de mesure définie par le rayon reliant cet accéléromètre au centre du cercle.

**5.** Procédé selon la revendication 4, dans lequel lesdits accéléromètres ($A_1$, ... $A_N$) sont répartis de façon uniforme sur ledit cercle.

**6.** Procédé selon la revendication 4 ou 5, dans lequel les accéléromètres ($A_1$,...$A_N$) présentent un bruit statistique de mesure gaussien et centré, ladite résolution de l'équation matricielle comprenant la minimisation d'un critère $L(\Phi, \eta)$ défini par l'équation suivante :

$$L(\theta,\eta) = \left(\sin(\phi)\underline{f}(\eta) - \underline{m}\right)^T \times \underline{\Gamma^{-1}} \times \left(\sin(\phi)\underline{f}(\eta) - \underline{m}\right)$$

avec $\underline{f}(\eta)$ un vecteur dont la i-ième composante est égale à $-\sin(\alpha_i+\eta)$, avec $\underline{\Gamma}$ une matrice de covariance correspondant aux bruits statistiques de mesure des accéléromètres ($A_1$,...$A_N$) pour lesdites directions de mesure.

**7.** Procédé selon la revendication 6, dans lequel les bruits statistiques des accéléromètres ($A_1$, ... $A_N$) sont statistiquement indépendants, et dans lequel la matrice de covariance $\underline{\Gamma}$ est une matrice diagonale et définie positive dont le

i-ième coefficient est égal à la variance $\sigma_i^2$ pour la i-ième direction de mesure.

**8.** Procédé selon l'une quelconque des revendications précédentes, dans lequel ladite structure tubulaire (50) présente une accélération propre maximale par rapport au repère de référence au moins dix fois inférieure à l'amplitude du champ de gravité g, de préférence au moins vingt fois inférieure à l'amplitude du champ de gravité g durant lesdites mesures.

**9.** Procédé selon l'une quelconque des revendications précédentes, dans lequel lesdites inclinaisons utilisées pour la détermination de ladite courbure sont basées sur des mesures simultanées des accéléromètres des premier et deuxième objets (54, 56).

**10.** Procédé selon l'une quelconque des revendications précédentes, dans lequel la courbure de la structure tubulaire (50) entre les premier et deuxième objets (54, 56) est déterminée au moyen de la formule suivante :

$$k(S) = \frac{d\phi(s)}{ds}$$

où k(S) est la courbure au point S d'abscisse curviligne s entre les premier et deuxième objets, $\Phi(s)$ étant l'inclinaison de la structure tubulaire au point S d'abscisse curviligne s.

**11.** Structure déformable tubulaire (50) de type conduite pétrolière offshore, **caractérisé en ce qu'**elle comprend :

- des premier et deuxième objets rigides (54, 56) fixés sur et le long de ladite conduite pétrolière offshore ;
- pour chacun desdits objets, plusieurs accéléromètres reliés de façon rigide par leur objet respectif, chacun de ces accéléromètres étant apte à mesurer une composante du champ de gravité terrestre selon au moins une direction de mesure pour fournir une valeur de mesure notée $m_j$ pour une direction de mesure d'indice i, les directions de mesure respectives d'au moins deux desdits accéléromètres étant non colinéaires ;
- un dispositif de calcul programmé pour :

  - déterminer l'inclinaison $\Phi$ de chacun desdits premier et deuxième objets (54, 56) par rapport à un repère de référence fixe par rapport à la direction du champ de gravité terrestre, par résolution de l'équation matricielle suivante :

$$M = A \begin{bmatrix} \cos(\phi) \\ -\sin(\phi)\sin(\eta) \\ -\sin(\phi)\cos(\eta) \end{bmatrix}$$

  avec M le vecteur dont la i-ième composante est définie par la mesure $m_j$, A une matrice définie par les directions de mesure des accéléromètres dans un référentiel solidaire dudit objet, et $\eta$ un angle de rotation de ce référentiel solidaire par rapport au référentiel fixe ;
  - déterminer la courbure de la structure tubulaire entre lesdits premier et deuxième objets à partir des inclinaisons déterminées pour les premier et deuxième objets.

## Patentansprüche

**1.** Verfahren zur Bestimmung der Krümmung einer verformbaren Rohrkonstruktion von der Art Offshore-Erdölleitung (50), **dadurch gekennzeichnet, dass** dieses Verfahren aufweist:

- die Bestimmung der Neigung erster und zweiter starrer Objekte (54, 56) in einem ortsfesten Bezugskoordinatensystem (X, Y, Z) bezüglich der Richtung des Erdschwerkraftfelds, wobei die starren Objekte an unterschiedlichen Stellen entlang und auf der Offshore-Erdölleitung befestigt sind, wobei die Bestimmung der Neigung jedes der Objekte enthält:

- die Bereitstellung mehrerer Beschleunigungsmesser ($A_1$, ... $A_N$), die starr vom Objekt verbunden werden, wobei jeder dieser Beschleunigungsmesser fähig ist, eine Beschleunigung gemäß mindestens einer Messrichtung (vj) zu messen, wobei die jeweiligen Messrichtungen von mindestens zwei der Beschleunigungsmesser nicht kollinear sind;
- die Messung, durch die Beschleunigungsmesser, der Komponenten des Erdschwerkraftfelds entlang der Messrichtungen, wobei diese Messung für jede der Richtungen einen mit $m_j$ bezeichneten Messwert für eine Indexmessrichtung i liefert;
- die Lösung der folgenden Matrixgleichung, um die Neigung $\Phi$ des Gegenstands (54) bezüglich des Bezugskoordinatensystems zu bestimmen:

$$M = A \left[ \begin{array}{c} \cos(\phi) \\ -\sin(\phi)\sin( \\ -\sin(\phi)\cos( \end{array} \right.$$

mit M dem Vektor, dessen i-te Komponente durch die Messung $m_j$ definiert wird, A einer Matrix definiert durch die Messrichtungen der Beschleunigungsmesser in einem fest mit dem Objekt verbundenen Bezugssystem, und $\eta$ einem Drehwinkel dieses fest verbundenen Bezugssystems bezüglich des ortsfesten Bezugssystems;

- die Bestimmung der Krümmung der Rohrkonstruktion ausgehend von den für die ersten und zweiten Objekte (54, 56) bestimmten Neigungen.

**2.** Verfahren nach Anspruch 1, wobei mindestens zwei Beschleunigungsmesser jedes der Objekte (54, 56) entfernt sind.

**3.** Verfahren nach Anspruch 1 oder 2, wobei die Lösung der Matrixgleichung bei einer Bestimmung einer Neigung die Minimierung eines Kriteriums $L(\Phi,\eta)$ enthält, das durch die folgende Gleichung definiert wird:

$$L(\phi,\eta) = \left\| M - A \begin{bmatrix} cos(\phi) \\ -sin(\phi)sin(\eta) \\ -sin(\phi)cos(\eta) \end{bmatrix} \right\|^2$$

**4.** Verfahren nach einem der vorhergehenden Ansprüche, wobei es mindestens vier Beschleunigungsmesser ($A_1$, ... $A_N$) jedes der Objekte (54, 56) gibt, sie auf einem Kreis (C) verteilt sind und je eine Messrichtung aufweisen, die durch den Radius definiert wird, der diesen Beschleunigungsmesser mit der Mitte des Kreises verbindet.

**5.** Verfahren nach Anspruch 4, wobei die Beschleunigungsmesser ($A_1$, ... $A_N$) gleichmäßig auf dem Kreis verteilt sind.

**6.** Verfahren nach Anspruch 4 oder 5, wobei die Beschleunigungsmesser ($A_1$, ... $A_N$) ein Gauss'sches und zentriertes statistisches Messrauschen aufweisen, wobei die Lösung der Matrixgleichung die Minimierung eines Kriteriums $L(\Phi,\eta)$ enthält, das durch die folgende Gleichung definiert wird:

$$L(\theta,\eta) = \left(sin(\phi)\underline{f}(\eta) - \underline{m}\right)^T \times \underline{\Gamma^{-1}} \times \left(sin(\phi)\underline{f}(\eta) - \underline{m}\right)$$

mit $\underline{f}(\eta)$ einem Vektor, dessen i-te Komponente gleich $-\sin(\alpha_i+\eta)$ ist, mit $\underline{\Gamma}$ einer Kovarianzmatrix, die dem statischen Messrauschen der Beschleunigungsmesser ($A_1$, ... $A_N$) für die Messrichtungen entspricht.

**7.** Verfahren nach Anspruch 6, wobei das statistische Rauschen der Beschleunigungsmesser ($A_1$, ... $A_N$) statistisch unabhängig ist, und wobei die Kovarianzmatrix $\underline{\Gamma}$ eine diagonale und positive definierte Matrix ist, deren i-ter Koeffizient gleich der Varianz $\sigma_i^2$ für die i-te Messrichtung ist.

**8.** Verfahren nach einem der vorhergehenden Ansprüche, wobei die Rohrkonstruktion (50) eine maximale Eigenbeschleunigung bezüglich des Bezugskoordinatensystems mindestens zehn Mal geringer als die Amplitude des Schwerkraftfelds g hat, vorzugsweise mindestens zwanzig Mal geringer als die Amplitude des Schwerkraftfelds g während der Messungen.

**9.** Verfahren nach einem der vorhergehenden Ansprüche, wobei die zur Bestimmung der Kurve verwendeten Neigungen auf gleichzeitigen Messungen der Beschleunigungsmesser der ersten und zweiten Objekte (54, 56) beruhen.

**10.** Verfahren nach einem der vorhergehenden Ansprüche, wobei die Krümmung der Rohrkonstruktion (50) zwischen den ersten und zweiten Objekten (54, 56) mittels der folgenden Formel bestimmt wird:

$$k(S) = \frac{d\phi(s)}{ds}$$

wobei k(S) die Krümmung am gekrümmten Abszissenpunkt s zwischen den ersten und zweiten Objekten ist, $\Phi(s)$ die Neigung der Rohrkonstruktion am gekrümmten Abszissenpunkt s ist.

**11.** Verformbare Rohrkonstruktion (50) der Art Offshore-Erdölleitung, **dadurch gekennzeichnet, dass** sie enthält:

- erste und zweite starre Objekte (54, 56) die auf und entlang der Offshore-Erdölleitung befestigt sind;
- für jedes der Objekte mehrere Beschleunigungsmesser, die durch ihr jeweiliges Objekt starr verbunden sind, wobei jeder dieser Beschleunigungsmesser fähig ist, eine Komponente des Erdschwerkraftfelds gemäß mindestens einer Messrichtung zu messen, um einen mit $m_j$ bezeichneten Messwert für eine Messrichtung mit dem Index i zu liefern, wobei die jeweiligen Messrichtungen von mindestens zwei der Beschleunigungsmesser nicht kollinear sind;
- eine Rechenvorrichtung, die programmiert ist, um:

  - die Neigung $\Phi$ jedes der ersten und zweiten Objekte (54, 56) bezüglich eines ortsfesten Bezugskoordinatensystems bezüglich der Richtung des Erdschwerkraftfelds durch Lösung der folgenden Matrixgleichung zu bestimmen:

$$M = A \begin{bmatrix} \cos(\phi) \\ -\sin(\phi)\sin(\eta) \\ -\sin(\phi)\cos(\eta) \end{bmatrix}$$

  mit M dem Vektor, dessen i-te Komponente durch die Messung $m_j$ definiert wird, A einer durch die Messrichtungen der Beschleunigungsmesser in einem fest mit dem Objekt verbundenen Bezugssystem definierten Matrix, und $\eta$ einem Drehwinkel dieses fest verbundenen Bezugssystems bezüglich des ortsfesten Bezugssystems;
  - die Krümmung der Rohrkonstruktion zwischen den ersten und zweiten Objekten ausgehend von den für die ersten und zweiten Objekte bestimmten Neigungen zu bestimmen.

## Claims

**1.** Method for determining the bend of a tubular deformable structure of the offshore oil pipe type (50), **characterized in that** this method comprises:

- the determination of the inclination of first and second rigid objects (54, 56) in a fixed reference frame of reference (X, Y, Z) relative to the direction of the Earth's gravitational field, said rigid objects being fixed in distinct locations along and on said offshore oil pipe, the determination of the inclination of each of said objects comprising:

  - the supply of a plurality of accelerometers ($A_1$,.,.$A_N$) rigidly linked by the object, each of these accelerometers being able to measure an acceleration in at least one direction of measurement (vj), the respective directions of measurement of at least two of said accelerometers being non-collinear;
- the measurement, by said accelerometers, of the components of the Earth's gravitational field along said directions of measurement, this measurement providing, for each of said directions, a measurement value, denoted $m_j$ for a direction of measurement of index i;
- the solving of the following matrix equation to determine the inclination Φ of the object (54) relative to the reference frame of reference:

$$M = A \begin{bmatrix} \cos(\phi) \\ -\sin(\phi)\sin(\eta) \\ -\sin(\phi)\cos(\eta) \end{bmatrix}$$

with M being the vector of which the ith component is defined by the measurement $m_j$, A being a matrix defined by the directions of measurement of the accelerometers in a reference frame secured to the object, and η being an angle of rotation of this secured reference frame relative to the fixed reference frame;

- the determination of the bend of the tubular structure from the inclinations determined for the first and second objects (54, 56).

**2.** Method according to Claim 1, in which at least two accelerometers of each of said objects (54, 56) are remote.

**3.** Method according to Claim 1 or 2, in which the solving of the matrix equation when determining an inclination comprises the minimization of a criterion L(Φ, η) defined by the following equation:

$$L(\phi, \eta) = \left\| M - A \begin{bmatrix} \cos(\phi) \\ -\sin(\phi)\sin(\eta) \\ -\sin(\phi)\cos(\eta) \end{bmatrix} \right\|^2$$

**4.** Method according to any one of the preceding claims, in which there are at least four of said accelerometers ($A_1$, ...$A_N$) for each of said objects (54, 56), they are distributed in a circle (C) and each exhibit a direction of measurement defined by the radius linking this accelerometer to the centre of the circle.

**5.** Method according to Claim 4, in which said accelerometers ($A_1$, ... $A_N$) are distributed uniformly in said circle.

**6.** Method according to Claim 4 or 5, in which the accelerometers ($A_1$, ...$A_N$) exhibit a gaussian and centred statistical measurement noise, said solving of the matrix equation comprising the minimization of a criterion L(Φ, η) defined by the following equation:

$$L(\theta,\eta) = \left(\sin(\phi)\underline{f}(\eta) - \underline{m}\right)^T \times \underline{\Gamma}^{-1} \times \left(\sin(\phi)\underline{f}(\eta) - \underline{m}\right)$$

with $\underline{f}$(n) being a vector of which the ith component is equal to $-\sin(\alpha_i+\eta)$, with $\underline{\Gamma}$ being a covariance matrix corresponding to the statistical measurement noises of the accelerometers ($A_1$, ...$A_N$) for said directions of measurement.

**7.** Method according to Claim 6, in which the statistical noises of the accelerometers ($A_1$, ... $A_N$) are statistically independent, and in which the covariance matrix $\underline{\Gamma}$ is a diagonal matrix defined positive of which the ith coefficient is equal to the variance $\sigma_i^2$ for the ith direction of measurement.

**8.** Method according to any one of the preceding claims, in which said tubular structure (50) exhibits a maximum inherent acceleration relative to the reference frame of reference at least ten times less than the amplitude of the gravitational field g, preferably at least twenty times less than the amplitude of the gravitational field g during said

measurements.

**9.** Method according to any one of the preceding claims, in which said inclinations used for the determination of said bend are based on simultaneous measurements of the accelerometers of the first and second objects (54, 56).

**10.** Method according to any one of the preceding claims, in which the bend of the tubular structure (50) between the first and second objects (54, 56) is determined by means of the following formula:

$$k(S) = \frac{d\phi(s)}{ds}$$

in which k(S) is the bend at the point S of curvilinear abscissa s between the first and second objects, Φ(s) being the inclination of the tubular structure at the point S of curvilinear abscissa s.

**11.** Tubular deformable structure (50) of the offshore oil pipe type, **characterized in that** it comprises:

- first and second rigid objects (54, 56) fixed on and along said offshore oil pipe;
- for each of said objects, a plurality of accelerometers rigidly linked by their respective object, each of these accelerometers being able to measure a component of the Earth's gravitational field in at least one direction of measurement to provide a measurement value denoted $m_j$ for a direction of measurement of index i, the respective directions of measurement of at least two of said accelerometers being non-collinear;
- a computation device programmed to:

  - determine the inclination Φ of each of said first and second objects (54, 56) relative to a fixed reference frame of reference relative to the direction of the Earth's gravitational field, by solving the following matrix equation:

$$M = A \begin{bmatrix} \cos(\phi) \\ -\sin(\phi)\sin(\eta) \\ -\sin(\phi)\cos(\eta) \end{bmatrix}$$

  with M being the vector of which the ith component is defined by the measurement $m_j$, A being a matrix defined by the directions of measurement of the accelerometers in a reference frame secured to said object, and η being an angle of rotation of this secured reference frame relative to the fixed reference frame;
  - determine the bend of the tubular structure between said first and second objects from the inclinations determined for the first and second objects.

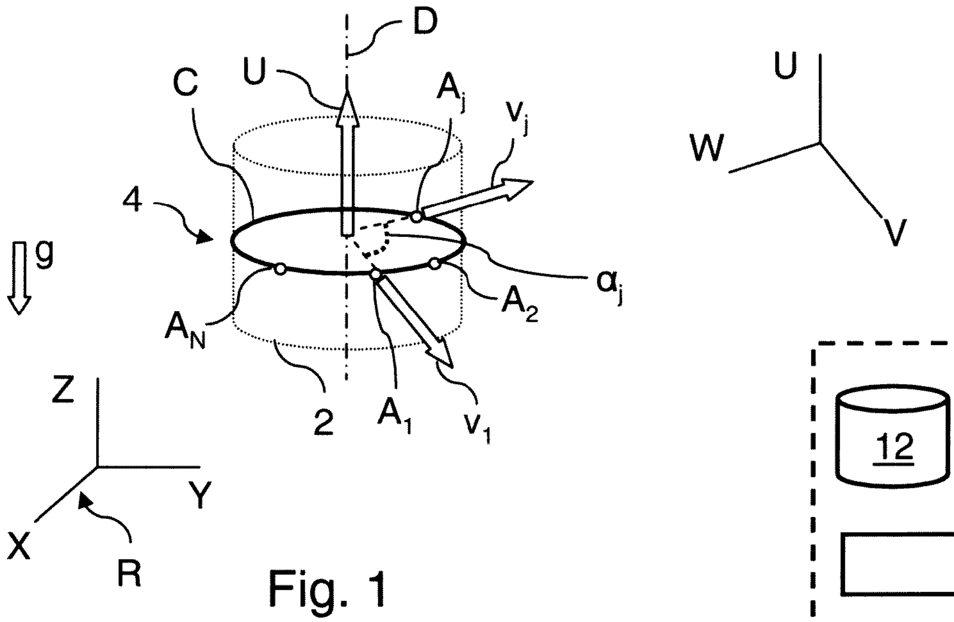


Fig. 1

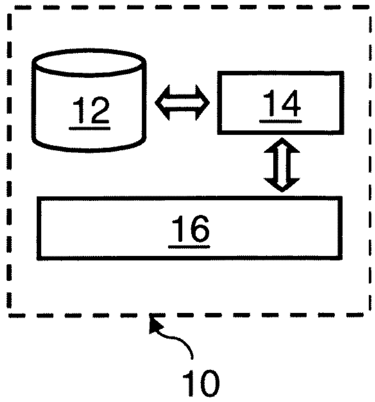


Fig. 2

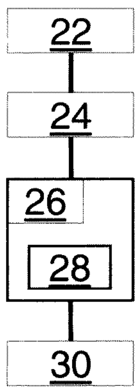


Fig. 3

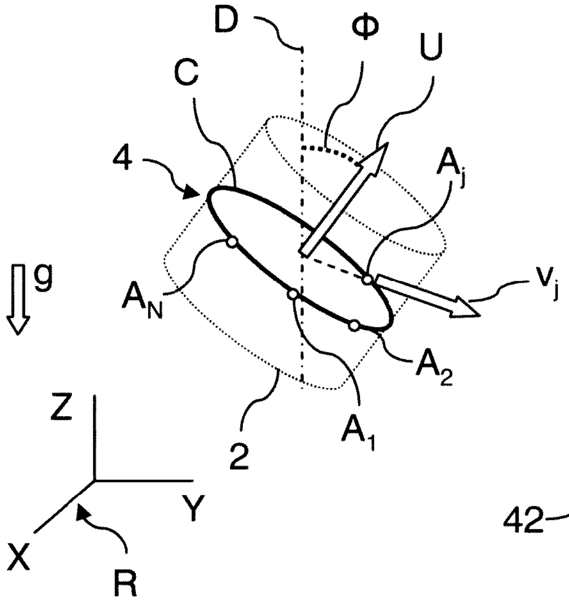


Fig. 4

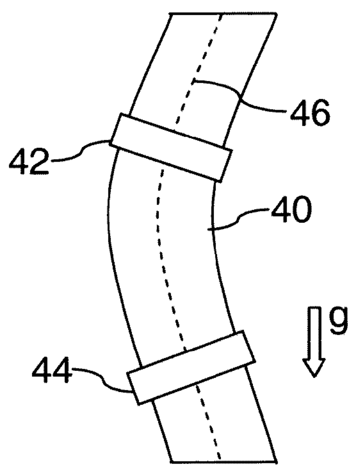


Fig. 5

Fig. 6

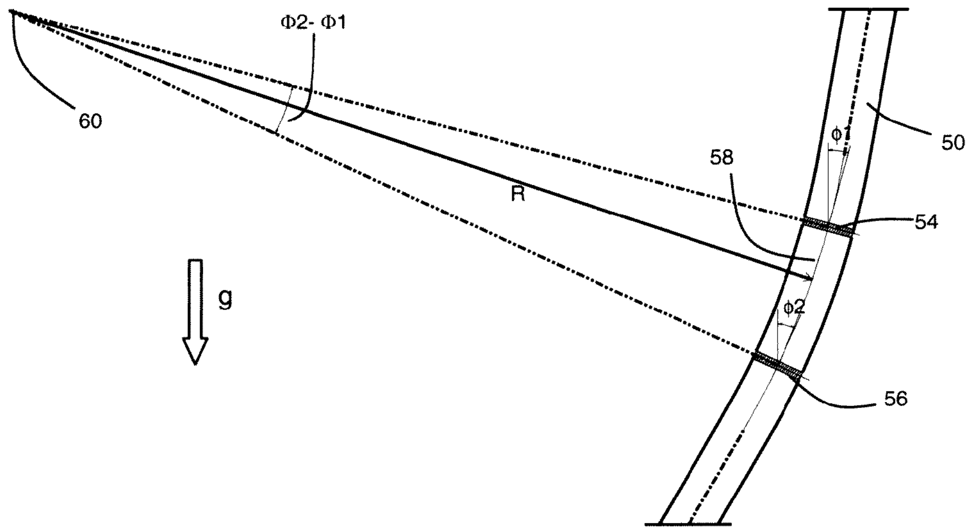


Fig. 7

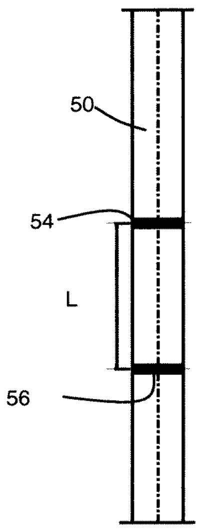

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2009109745 A
- GB 2086055 A
- FR 2610100
- US 2008211808 A

### Littérature non-brevet citée dans la description

- Recommended Practice for Flexible Pipe. API RP 17B. l'American Petroleum Institute
- Specification for Subsea Umbilicals. API RP 17E. l'American Petroleum Institute
- **N. SPRYNSKI.** Reconstruction de courbes et surfaces à partir de données tangentielles. Université Joseph Fourier, 2007